(19) Europäisches Patentamt / European Patent Office / Office européen des brevets

(11) **EP 4 300 095 B1**

(12) **FASCICULE DE BREVET EUROPEEN**

(45) Date de publication et mention
de la délivrance du brevet:
**26.06.2024 Bulletin 2024/26**

(21) Numéro de dépôt: **23182701.5**

(22) Date de dépôt: **30.06.2023**

(51) Classification Internationale des Brevets (IPC):
***G01N 29/14*** *(2006.01)*

(52) Classification Coopérative des Brevets (CPC):
**G01N 29/14;** G01N 2291/0231

(54) **PROCÉDÉ D'IDENTIFICATION AUTOMATIQUE D'UNE SOURCE ACOUSTIQUE A PARTIR D'UN SIGNAL ACOUSTIQUE PRODUIT**

VERFAHREN ZUR AUTOMATISCHEN IDENTIFIZIERUNG EINER AKUSTISCHEN QUELLE AUS EINEM ERZEUGTEN AKUSTISCHEN SIGNAL

METHOD FOR AUTOMATICALLY IDENTIFYING AN ACOUSTIC SOURCE FROM A GENERATED ACOUSTIC SIGNAL

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **30.06.2022 FR 2206583**

(43) Date de publication de la demande:
**03.01.2024 Bulletin 2024/01**

(73) Titulaire: **Commissariat à l'énergie atomique
et aux énergies alternatives
75015 Paris (FR)**

(72) Inventeur: **RECOQUILLAY, Arnaud
91191 Gif-sur-Yvette Cedex (FR)**

(74) Mandataire: **INNOV-GROUP
310, avenue Berthelot
69372 Lyon Cedex 08 (FR)**

(56) Documents cités:
- **SABRA KARIM G ET AL: "Blind deconvolution in ocean waveguides using artificial time reversala)", THE JOURNAL OF THE ACOUSTICAL SOCIETY OF AMERICA, AMERICAN INSTITUTE OF PHYSICS, 2 HUNTINGTON QUADRANGLE, MELVILLE, NY 11747, vol. 116, no. 1, 1 juillet 2004 (2004-07-01), pages 262-271, XP012072372, ISSN: 0001-4966, DOI: 10.1121/1.1751151**
- **Farova Zuzana ET AL: "Experimental Signal Deconvolution in Acoustic Emission Identification Setup", 6th International Workshop NDT in Progress 201, 12 octobre 2011 (2011-10-12), pages 33-40, XP093028384, ISBN: 978-80-21-44339-6 Extrait de l'Internet: URL:https://www.ndt.net/article/ndtp2011/papers/50_Farova.pdf [extrait le 2023-03-02]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne un procédé et un appareil d'identification automatique d'une source acoustique à partir d'un signal acoustique produit par l'apparition ou l'évolution d'un défaut dans une structure. L'invention concerne également un support d'enregistrement d'informations pour la mise en oeuvre de ce procédé.

De tels procédés d'identification sont utilisés pour identifier le type de défaut qui est apparu dans une structure. En effet, dans une structure industrielle, les sources acoustiques peuvent être diverses (chute d'un objet, fissuration, corrosion, décohésion de matière, frottement...). Suivant l'objectif du procédé ou de l'appareil d'identification, celui-ci va être calibré pour être sensible uniquement à certains événements. La répartition temporelle de ces événements permet un suivi de l'état de santé de la structure. Cependant, cette calibration peut être grossière, ou plusieurs événements différents peuvent être d'intérêt, par exemple différents types d'endommagement tels que la casse de fibre ou la fissuration de matrice dans le cas d'un composite. C'est pourquoi un suivi individuel des événements de chaque nature peut fournir une information significativement plus fine pour la surveillance (par exemple, déclencher une alerte lorsque de la casse de fibre intervient, mais pas pour de la fissuration de matrice, ou éliminer les signaux perturbateurs).

Par exemple, la structure à inspecter est une plaque en plastique renforcée par des fibres ou similaires. Dans ce cas, la source acoustique à identifier est le type de défaut qui est apparu ou qui évolue. Dans ce texte, l'expression « type de défaut » désigne la nature physique du défaut. Par exemple, dans le cas des structures constituées d'une matrice en plastique renforcée par des fibres, il existe principalement quatre types de défaut à savoir :

- des casses de fibre,
- du délaminage,
- de la décohésion de matrice-fibre, et
- de la fissuration de la matrice.

Ces procédés sont donc utilisés dans le domaine du contrôle non destructif ou du SHM (« STRUCTURAL HEALTH MONITORING »).

Des procédés connus d'identification d'une source acoustique à partir du signal acoustique produit par l'apparition ou l'évolution d'un défaut dans la structure comportent les étapes suivantes :

- l'instrumentation de la structure avec un ou plusieurs capteurs capables de mesurer des signaux ultrasonores,
- la mesure des signaux ultrasonores causés par l'apparition ou l'évolution du défaut, puis
- l'extraction de certaines caractéristiques physiques des signaux ultrasonores mesurés puis,
- la classification automatique de la source acoustique dans une classe parmi plusieurs classes possibles à partir des caractéristiques physiques extraites.

Des exemples de tels procédés connus sont décrits dans les articles suivants :

1) Pashmforoush, F. et Al : « Damage characterization of glass/epoxy composite under three-point bending test using acoustic émission technique », Journal of materials engineering and performance, vol. 21(7), pp 1380-1390, 2012,
2) Morizet, N. et AL : « Classification of acoustic émission signals using wavelets and Random Forests : Application to localized corrosion », Mechanical Systems and Signal Processing, 70, 1026-1037, 2016
3) Hisham A Sawan et AL : « Unsupervised learning for classification of acoustic émission events from tensile and bending experiments with open-hole carbon fiber composite samples », Composites Science and Technology, Volume 107, 2015, Pages 89-97,
4) Farova Zuzana et Al : « Experimental Signal Deconvolution in Acoustic Emission Identification Setup », 6th International Workshop NDT in Progress 201, 12/10/2011, pages 33-40.

Les articles numérotés de 1) à 3) ci-dessus sont, dans ce texte, désignés par, respectivement, les références suivantes : Pashmforoush2012, Morizet2016 et Sawan2015.

L'article numérotés 4) nécessite l'inversion temporelle de signaux mesurés par des capteurs fixés sur la structure avant de les ré-injecter dans la structure pour finalement mesurer les signaux ré-injectés à l'aide d'un capteur supplémentaire situé à l'emplacement où s'est produit le défaut qui a généré les signaux mesurés. L'utilisation de ce capteur supplémentaire situé à l'emplacement où se produit le défaut rend ce procédé d'identification difficile à mettre en oeuvre voir impossible. Par exemple, lorsque le défaut apparaît à l'intérieur de la structure, il n'est pas possible de placer le capteur supplémentaire à l'emplacement de ce défaut, ou si les zones d'émission sont étendues, cette méthode demanderait une instrumentation très lourde.

Un tel procédé connu est également décrit dans la demande RU2737235C1. Il est souligné que le procédé décrit dans la demande RU2737235C1 comporte en plus une étape de localisation de la position de la source acoustique avant de réaliser la classification. Dans ce procédé, la position de la source acoustique est utilisée pour déterminer la distance qui sépare chaque capteur de la source acoustique. Ensuite, le type de défaut est identifié à partir d'un ratio entre l'amplitude de certaines composantes fréquentielles du signal ultrasonore mesuré par un capteur et la distance qui sépare ce capteur de la source acoustique.

Ces procédés connus d'identification présentent notamment l'avantage qu'il n'est pas nécessaire d'équiper la structure avec un émetteur électronique d'ondes telles que des ondes ultrasonores. En effet, c'est l'onde ultrasonore générée par le défaut luimême qui est utilisée pour réaliser cette identification.

Les procédés connus d'identification fonctionnent correctement pour des structures de petites dimensions. Par contre, ces procédés fonctionnent moins bien avec des structures de grandes dimensions dans lesquelles la distance entre la source acoustique et les capteurs peut être beaucoup plus grande. En effet, l'identification est réalisée au moyen des paramètres des signaux, or ces paramètres sont fortement impactés par la propagation de l'onde dans la structure, cet effet pouvant être prédominant par rapport aux variations dues à la nature physique de la source. Ainsi, le processus de classification risque en pratique de discriminer la distance de propagation plutôt que la nature physique, distance qui peut varier du fait de l'utilisation de plusieurs capteurs et de sources localisées aléatoirement sur la structure en pratique. A ce sujet, il est rappelé que la localisation du défaut n'est pas connue a priori.

L'invention vise à proposer un procédé d'identification d'une source acoustique qui présente les mêmes avantages que les procédés connus tout en fonctionnant aussi bien avec des structures de petites dimensions qu'avec des structures de grandes dimensions.

Elle a donc pour objet un procédé d'identification conforme à la revendication 1.

Elle a également pour objet un support d'enregistrement d'informations lisible par un microprocesseur, dans lequel ce support comporte des instructions non-transitoires pour l'exécution des étapes b) à d) du procédé d'identification revendiqué, lorsque ces instructions sont exécutées par le microprocesseur.

Elle a également pour objet un appareil d'identification automatique d'une source acoustique qui met en oeuvre le procédé ci-dessus d'identification.

L'invention sera mieux comprise à la lecture de la description qui va suivre donnée uniquement à titre d'exemple non limitatif et faite en se référant aux dessins sur lesquels :

- la figure 1 est une illustration schématique de l'architecture d'un appareil d'identification automatique d'une source acoustique ;
- la figure 2 est un organigramme d'un procédé d'identification automatique d'une source acoustique à l'aide de l'appareil de la figure 1 ;
- la figure 3 est un graphe illustrant les résultats expérimentaux obtenus en mettant en oeuvre le procédé de la figure 2, et
- la figure 4 est un organigramme d'un autre procédé d'identification susceptible d'être mis en oeuvre par l'appareil de la figure 1.

Dans ces figures, les mêmes références sont utilisées pour désigner les mêmes éléments. Dans la suite de cette description, les caractéristiques et fonctions bien connues de l'homme du métier ne sont pas décrites en détail.

CHAPITRE I : Exemples de modes de réalisation

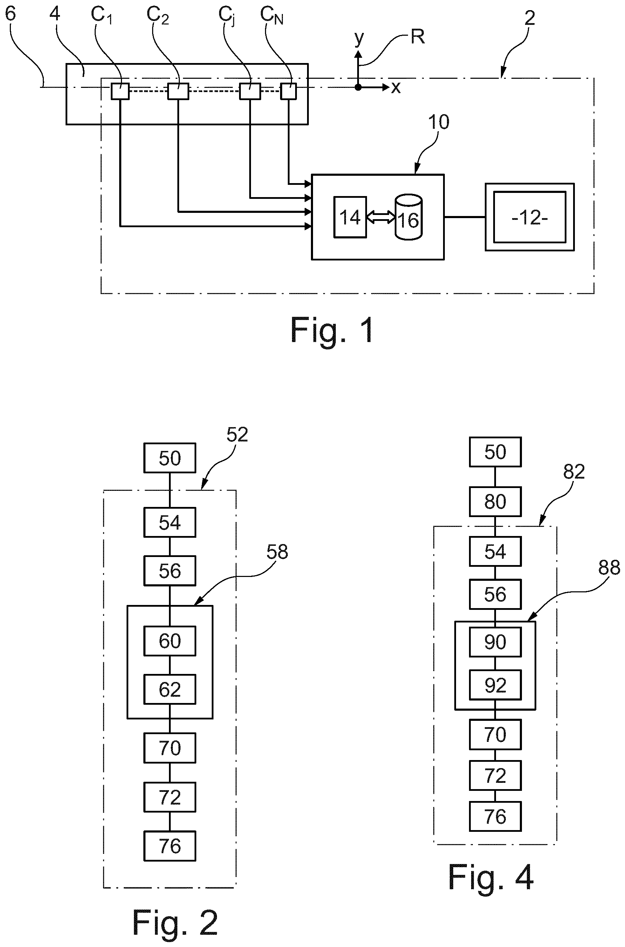

La figure 1 représente un appareil 2 d'identification automatique d'une source acoustique à partir du signal acoustique produit par l'apparition ou l'évolution d'un défaut dans une structure 4. Dans ce cas, la source acoustique est le défaut qui apparaît ou évolue.

Dans ce premier mode de réalisation, la structure 4 peut être toute structure dans laquelle, lorsqu'un défaut apparaît ou évolue, un signal acoustique S(t) est généré par ce défaut. L'essentiel de la puissance du signal S(t) est généralement situé dans la bande des fréquences ultrasonores, c'est-à-dire dans une bande de fréquences allant de 16 kHz à 10 MHz. En général, le spectre de puissance du signal S(t) ne recouvre qu'une partie de la bande des fréquences ultrasonores.

La structure 4 est réalisée dans un matériau qui permet à ce signal S(t) de se propager à l'intérieur de cette structure sur une distance suffisante pour pouvoir être mesurée par un capteur et distinguée d'un bruit de fond.

A titre d'illustration, ici, la structure 4 est un tube en matériau composite formé d'une matrice en plastique renforcée par des fibres. Ce tube s'étend le long d'un axe 6 de révolution sur une distance de 2 mètres. Sa section transversale est constante et circulaire sur toute sa longueur.

Un repère R est attaché sans aucun degré de liberté à la structure 4. La position de chaque point de la structure 4 est repérée par des coordonnées dans le repère R. Ici, le repère R comporte un axe X confondu avec l'axe 6 de révolution et un axe Y perpendiculaire à l'axe X. Par exemple, l'axe Y est vertical et l'axe X est horizontal.

Par la suite, étant donné que dans le cas particulier décrit ici, la structure 4 est invariante par toute rotation autour de l'axe 6, la position de chaque point P de la structure 4 est définie par des coordonnées cylindriques $(x_p, \theta_p)$, où :

- $x_p$ représente l'abscisse de ce point le long de l'axe X du repère R, et
- $\theta_p$ est l'angle entre un vecteur $O_k P$ et une direction parallèle à l'axe Y, où le vecteur $O_k P$ est le vecteur, perpendiculaire à l'axe 6 qui s'étend du point $O_k$ situé sur l'axe 6 jusqu'au point P de la structure 4.

L'appareil 2 comporte :

- un calculateur électronique 10,
- une interface homme/machine 12 raccordée au calculateur 10, et
- N capteurs $C_1$ à $C_N$ raccordés au calculateur 10.

Le calculateur 10 comporte un microprocesseur programmable 14 et une mémoire 16. La mémoire 16 comporte les instructions et les données nécessaires à l'exécution du procédé de la figure 2 ou de la figure 4, lorsque ces instructions sont exécutées par le microprocesseur 14.

L'interface homme/machine 12 est capable de communiquer, de façon directement intelligible par un être humain, les résultats de la mise en oeuvre du procédé d'identification de la figure 2 ou 4. Par exemple, l'interface 12 comporte un écran.

Chaque capteur $C_j$ mesure le signal ultrasonore produit par l'apparition ou l'évolution d'un défaut dans la structure 4. Dans ce texte, l'indice j est un nombre entier compris entre 1 et N qui identifie le capteur $C_j$. Le calculateur 10 acquiert les mesures de chaque capteur $C_j$ pour les traiter.

L'appareil 2 comporte au moins trois capteurs $C_j$ et, le plus souvent, au moins quatre ou six ou huit capteurs $C_j$. Ici, à titre d'illustration, le nombre total N de capteur $C_j$ est égal à huit. Sur la figure 1, seuls les capteurs $C_1$, $C_2$, $C_j$ et $C_N$ sont représentés. La représentation des autres capteurs a été remplacée par des pointillés pour simplifier la figure 1.

Ici, les capteurs $C_j$ sont tous structurellement identiques les uns aux autres et se distinguent les uns des autres seulement par leurs positions dans le repère R. Par exemple, les capteurs $C_j$ sont des capteurs piézoélectriques dont la bande passante recouvre au moins la bande [100 kHz ; 500 kHz] et, de préférence, la bande [50 kHz ; 0,5 MHz] ou [20 kHz ; 0,5 MHz].

Chaque capteur $C_j$ est fixé sur la structure 4 à un emplacement respectif $P_j$ où il est capable de mesurer un signal ultrasonore qui se propage dans la structure 4. Les coordonnées $(x_j ; \theta_j)$ de chaque emplacement $P_j$ sont connues et mémorisées dans la mémoire 16.

La fréquence d'échantillonnage $f_e$ des mesures des capteurs $C_j$ est élevée c'est-à-dire typiquement supérieure à 1 MHz.

Ici, à titre d'illustration, les emplacements $P_j$ sont uniformément répartis le long d'un axe parallèle à l'axe 6. Toutefois, d'autres répartitions des emplacements $P_j$ sur la surface de la structure 4 sont possibles. Par exemple, plusieurs des emplacements $P_j$ peuvent aussi être répartis le long de la circonférence circulaire de la structure 4. De préférence, la distance entre l'un quelconque des emplacements $P_j$ et l'emplacement $P_{j+1}$ le plus proche, est calculée de manière à assurer une bonne couverture de la structure, à savoir qu'au moins deux capteurs peuvent mesurer un signal significatif pour une source en tout point de la structure.

Le fonctionnement de l'appareil 2 va maintenant être décrit en référence au procédé de la figure 2.

Lors d'une étape 50 d'instrumentation, les capteurs $C_j$ sont fixés chacun à un emplacement $P_j$ respectif sur la structure 4. Les coordonnées $(x_j ; \theta_j)$ de chaque position $P_j$ sont enregistrées dans la mémoire 16 en association avec l'identifiant j du capteur $C_j$.

Débute alors une phase 52 d'utilisation de l'appareil 2 pour détecter et identifier une source acoustique.

Lors d'une étape 54, chaque capteur $C_j$ mesure le signal ultrasonore $F_j$ (t) qui se propage dans la structure 4. Typiquement, l'enregistrement et le traitement du signal par chaque capteur est déclenché par la détection d'une onde par ce capteur, par exemple, par le passage du signal ultrasonore $F_j(t)$ au-dessus d'un seuil. L'enregistrement s'arrête lorsque l'onde n'est plus détectée, par exemple lorsque le signal ultrasonore est en-dessous du seuil pendant une durée significative déterminée au préalable. Le seuil et la durée significative enregistrée après la dernière détection de l'onde sont donc choisis de manière à ne pas perdre d'information. La durée enregistrée est typiquement de l'ordre de la milliseconde.

A l'inverse, la durée significative après la dernière détection est suffisamment courte et le seuil suffisamment élevé pour que, dans la très grande majorité des cas, un seul défaut apparaît ou évolue pendant l'enregistrement et le bruit ne déclenche pas l'enregistrement. Par exemple, pour cela, généralement, la durée significative après dernière détection est de l'ordre de quelques centaines de $\mu$s.

En même temps, lors de l'étape 54, les mesures des capteurs $C_j$ sont acquises par le calculateur 10 à la fréquence d'échantillonnage $f_e$. La fréquence $f_e$ est suffisamment grande pour permettre d'acquérir les signaux $F_j(t)$

mesurés en évitant ou en éliminant les phénomènes de repliement de spectres. Par exemple, ici, la fréquence $f_e$ est supérieure à 1 MHz. Avantageusement, la fréquence $f_e$ est deux fois supérieure à la plus grande borne de la bande passante des capteurs $C_j$.

Le signal $F_j(t)$ mesuré par chaque capteur $C_j$ est relié, dans le domaine fréquentiel, au signal $S(t)$ généré par le défaut par la relation suivante : $F_j(w) = R_j(w)G_j(w)S(w)$, où :

- j est un indice identifiant le capteur $C_j$,
- w est la pulsation en radian,
- $F_j(w)$ est la transformée de Fourier du signal ultrasonore $F_j(t)$ mesuré dans le domaine temporel par le capteur $C_j$,
- $S(w)$ est la transformée de Fourier du signal acoustique $S(t)$ produit par l'apparition ou l'évolution du défaut dans la structure,
- $R_j(w)$ est la réponse, dans le domaine fréquentiel, du capteur $C_j$,
- $G_j(w)$ est la fonction, dans le domaine fréquentiel, de propagation du signal acoustique dans la structure entre la position $P_s$ où le défaut apparaît et l'emplacement $P_j$ du capteur $C_j$.

Une fois que les signaux $F_j(t)$ ont été acquis, lors d'une étape 56, le calculateur 10 localise la position $P_s$ du défaut qui a généré les signaux ultrasonores acquis par les capteurs $C_j$. Cette localisation consiste à déterminer les coordonnées $(x_s ; \theta_s)$ de la position $P_s$ dans le repère R à partir des signaux $F_j(t)$ mesurés et acquis et des coordonnées connues des emplacements $P_j$. De plus ici, la célérité c à laquelle se propage le signal $S(t)$ dans la structure 4 est également déterminée lors de l'étape 56. Par exemple ici, pour déterminer les coordonnées $(x_s ; \theta_s)$ et la célérité c, la méthode de triangulation décrite dans l'article suivant est implémentée : Zhang, F. et AL : « Evaluation of acoustic émission source localization accuracy in concrète structures », Structural Health Monitoring, vol. 19(6), pages 2063-2074, 2020.

Plus précisément, les instants $t_j$ d'arrivée du signal $S(t)$ au niveau de chaque emplacement $P_j$ sont relevés à partir des signaux ultrasonores $F_j(t)$ acquis. Par exemple, l'instant $t_j$ correspond au premier instant où l'amplitude du signal $F_j(t)$ dépasse un seuil prédéterminé.

Ensuite, la position $P_s$ et la célérité c sont pris égales à la position et à la célérité qui minimise la fonction de coût $J(P_s ; c)$ suivante :

$$J\left(P_s, c\right) = \sum_{i=1}^{N-1} \sum_{j=i+1}^{N} \left(\|P_s - P_i\| - \|P_s - P_j\| - c\left(t_i - t_j\right)\right)^2$$

Pour cela, un algorithme de minimisation de la fonction de coût $J(P_s ; c)$ est implémenté. Par exemple, il peut s'agir d'un algorithme tel que l'algorithme de NEWTON ou l'algorithme du SIMPLEXE. Des algorithmes génétiques peuvent aussi être mis en oeuvre.

Une fois la localisation de la source acoustique terminée, lors d'une étape 58 de reconstruction, le calculateur 10 construit une estimation $S_e(w)$ du signal $S(w)$ produit à la position $P_s$ par le défaut. Cette étape vise à compenser la propagation du signal $S(t)$ entre la position $P_s$ et les emplacements $P_j$. Pour cela, dans ce premier mode de réalisation, le calculateur 10 utilise les signaux $F_j(t)$, la position $P_s$ et la célérité c déterminées lors de l'étape 56.

Plus précisément, dans ce premier mode de réalisation, une méthode de reconstruction dite « aveugle » est mise en oeuvre. Cette méthode est qualifiée de « aveugle » car elle ne nécessite pas que chaque fonction $G_j(w)$ de propagation du signal $S(t)$ de la position $P_s$ jusqu'à la position $P_j$ soit apprise au préalable lors d'une étape d'apprentissage. Ces méthodes sont plus connues sous le terme anglais de « Blind source deconvolution »).

Ici, la méthode mise en oeuvre par le calculateur 10 est décrite dans l'article suivant : Sabra, K. G. et AL : « Blind deconvolution in ocean waveguides using artificial time reversai », The Journal of the Acoustical Society of America, vol. 116(1), pages 262-271, 2004. Par la suite, cet article est désigné par la référence Sabra2004.

Selon cette méthode, lors d'une opération 60, le calculateur 10 construit une estimation $G_{e,j}(w)$ de chaque fonction $G_j(w)$ de propagation du signal $S(t)$ de la position $P_s$ jusqu'à l'emplacement $P_j$. Ici, chaque fonction $G_{e,j}(w)$ de propagation est une fonction de Green. Pour cela, l'estimation $G_{e,j}(w)$ de la fonction $G_j(w)$ est prise égale au signal $F_j(t)$ normalisé par la norme $L_2$ de tous les signaux $F_j(t)$ et multiplié par une phase estimée $\Gamma$. Plus précisément, l'estimation $G_{e,j}(w)$ est construite à l'aide des relations suivantes :

$$G_{e,j}(w) = \frac{F_j(w)}{\sqrt{\sum_{a=1}^{N} F_a(w)^2}} e^{-i\Gamma}$$

où :

- i est le nombre imaginaire tel que $i^2=-1$,
- $\Gamma$ est une phase définie par la relation suivante :

$$\Gamma = arg \sum_{j=1}^{N} W_j F_j(w)$$

où :

- « arg » est la fonction qui retourne l'argument d'un nombre complexe, et
- $W_j$ sont des poids prédéfinis.

De plus, ici, pour rendre le procédé de la figure 2 indépendant des caractéristiques et des propriétés physiques de la structure 4, les poids $W_j$ sont calculés à l'aide de la relation suivante :

$$W_j = e^{\frac{-i\|P_s - P_j\|}{c} w}$$

où :

- i est le nombre imaginaire tel que $i^2=-1$,
- $\|P_s - P_j\|$ est la distance qui sépare les positions $P_s$ et $P_j$,
- c est la célérité déterminée lors de l'étape 56, et
- w est la pulsation en radian.

Ensuite, lors d'une opération 62, l'estimation $S_e(w)$ est construite par retro-propagation des signaux $F_j(t)$ au niveau de la position $P_s$. Pour cela, ici, chaque signal $F_j(t)$ est rétro-propagé au niveau de la position $P_s$. La rétro-propagation d'un signal $F_j(t)$ consiste à multiplier le signal $F_j(w)$ par le conjugué de la fonction complexe de propagation. Autrement dit, le signal $F_j(w)$ rétro-propagé au niveau de la position $P_s$ est donné par la relation suivante : $(R_j(w)G_{e,j}(w))^*F_j(w)$, où le symbole «(...)* » désigne le conjugué de la fonction complexe $R_j(w)G_{e,j}(w)$ entre parenthèses.

L'estimation $S_e(w)$ est donc construite à partir des termes $(R_j(w)G_{e,j}(w))^*F_j(w)$ et chaque terme $(R_j(w)G_{e,j}(w))^*F_j(w)$ est le produit du conjugué de la fonction $R_j(w)G_{e,j}(w)$ par la fonction $F_j(w)$. Ici, l'estimation $S_e(w)$ est prise égale à la moyenne des N termes $(R_j(w)G_{e,j}(w))^*F_j(w)$. Ainsi, l'estimation $S_e(w)$ est construite à l'aide de la relation suivante :

$$S_e(w) = \frac{1}{N} \sum_{j=1}^{N} \left( R_j(w) G_{e,j}(w) \right)^* F_j(w)$$

De plus, dans ce mode de réalisation, pour simplifier, chaque fonction $R_j(w)$ est égale à un quelle que soit la valeur de la pulsation w. Ainsi, l'estimation $S_e(w)$ est simplement construite à l'aide de la relation suivante :

$$S_e(w) = \frac{1}{N} \sum_{j=1}^{N} \left(G_{e,j}(w)\right)^* F_j(w)$$

Une fois l'estimation $S_e(w)$ construite, dans ce mode de réalisation, lors d'une étape 70, l'estimation $S_e(t)$ du signal S(t) dans le domaine temporel est obtenue, par exemple, en appliquant une transformation de Fourier inverse à l'estimation $S_e(w)$.

Ensuite, dans ce mode de réalisation, le calculateur 10 exécute une étape 72 de réduction de la dimensionnalité. Une telle étape est également connue sous le terme de « réduction de dimensions ». En effet, les estimations $S_e(w)$ et $S_e(t)$ sont généralement volumineuses, c'est-à-dire sont souvent composées de plusieurs dizaines de milliers ou centaines de milliers d'échantillons. L'étape 72 vise à réduire la quantité d'informations à traiter tout en conservant les informations essentielles qui vont permettre une identification fiable et robuste du défaut.

Dans ce mode de réalisation, l'étape 72 consiste à extraire des caractéristiques physiques propres au signal S(t) à partir des estimations $S_e(w)$ et $S_e(t)$ précédemment construites. Par exemple, ici, il est procédé comme décrit dans la section 2.2 de l'article Morizet2016 sauf qu'aucune énergie dans une bande supérieure à 200 kHz n'est extraite.

Enfin, une étape 76 de classification est exécutée par le calculateur 10. Lors de cette étape 76, le calculateur 10 classe le signal S(t) dans une classe choisie parmi plusieurs classes possibles à partir des caractéristiques extraites lors de l'étape 72. Pour cela, le calculateur 10 exécute une méthode de classification automatique. Par exemple, ici, le calculateur 10 exécute une méthode de classification non-supervisée connue. Cette méthode de classification non-supervisée connue est, par exemple, une méthode de classification automatique utilisant un modèle de mélange gaussien (« Gaussian Mixture Model » en anglais) ou la méthode connue sous le nom anglais de « k-means » et décrite, par exemple, dans l'article Pashmforoush2012. Ici, pour la mise en oeuvre de cette méthode de classification, le nombre $N_k$ de classes a été déterminé au préalable. Par exemple, pour la structure 4, le nombre $N_k$ de classe a été choisi égal à trois. Le nombre $N_k$ de classes le plus approprié a ici été déterminé en essayant plusieurs valeurs possibles pour le nombre $N_k$ puis en calculant pour chacune de ces valeurs du nombre $N_k$, la valeur de l'index DB (« DAVIES-BOULDIN »). La valeur du nombre $N_k$ pour laquelle la valeur de l'index DB est minimale a été retenue. Ce calcul de la valeur de l'index DB est par exemple décrit dans la section 3.2 de l'article Pashmforoush2012. Chaque classe est reliée à une nature physique du défaut qui a produit le signal acoustique classé. Ainsi, le procédé d'identification permet non seulement de détecter l'apparition ou l'évolution d'un défaut mais aussi d'identifier la nature physique de ce défaut.

Ce qui a été décrit ci-dessus est répété pour chaque nouvel événement mesuré par les capteurs $C_j$.

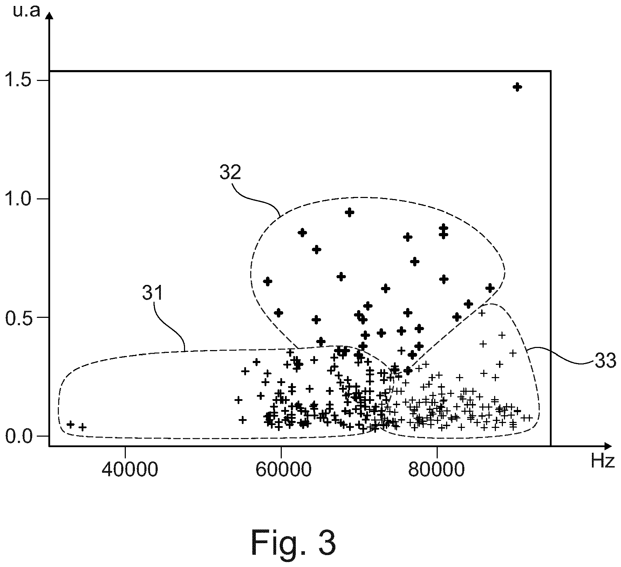

La figure 3 illustre sous la forme d'un graphe les résultats obtenus en déformant la structure 4 de façon répétée de manière à faire apparaître des défauts. Sur cette figure, chaque point correspond à une source acoustique et donc à l'apparition ou à l'évolution d'un défaut dans la structure 4. L'axe des ordonnées est gradué dans une unité arbitraire proportionnelle à l'amplitude du signal $S_e(t)$ et l'axe des abscisses en Hertz. Pour chaque source acoustique identifiée, l'amplitude de l'estimation $S_e(t)$ et le centroïde fréquentiel de l'estimation $S_e(w)$ ont été calculés puis cette source acoustique a été placée sur le graphe de la figure 3 en utilisant la valeur de son centroïde fréquentiel comme abscisse et l'amplitude calculée comme ordonnée. Le centroïde fréquentiel est calculé comme décrit dans la section 6.1.1 de l'article suivant : Geoffroy Peeters : « A large set of audio features for sound description (similarity and classification) in the CUIDADO project », 2004. Le centroïde fréquentiel est exprimé en Hertz. Chaque source acoustique a été classée dans l'une des trois classes possibles en mettant en oeuvre le procédé de la figure 2. Le graphe de la figure 3 comporte trois zones 31, 32 et 33 qui entourent chacune les points classés dans une classe respective. Les chevauchements entre ces trois zones 31, 32 et 33 sont très faibles, ce qui illustre le fait que la classification réalisée est robuste.

La figure 4 représente un autre procédé d'identification susceptible d'être mis en oeuvre à la place du procédé de la figure 2 par le calculateur 10. Le procédé de la figure 4 est identique au procédé de la figure 2 sauf que :

- une étape 80 d'apprentissage de chaque fonction de propagation $G_j(w)$ est introduite entre l'étape 50 et la phase d'utilisation, et
- la phase 52 d'utilisation est remplacée par une phase 82 d'utilisation.

Lors de l'étape 80, un signal acoustique connu $S_c(t)$ à large spectre est appliqué à différents emplacements $P_k$ de la structure 4. Le signal $S_c(t)$ présente un spectre qui recouvre la bande passante de la structure 4, c'est-à-dire qui inclut toutes les fréquences susceptibles de se propager et d'être mesurées dans la structure 4 sans être trop atténuées. Par exemple, ici, le spectre du signal $S_c(t)$ recouvre la bande des fréquences ultrasonores. Par exemple, dans ce mode de réalisation, le signal $S_c(t)$ appliqué à chaque emplacement $P_k$ est une source de Hsu-Nielsen c'est-à-dire une source acoustique produite par la rupture d'une mine de crayon. Cette source étant connue, elle n'est pas décrite plus en détail.

Les emplacements $P_k$ sont ici uniformément répartis sur la surface de la structure 4. Par exemple, les empla-

cements $P_k$ correspondent aux sommets d'un maillage qui recouvre la surface 4. Typiquement, les tuiles de ce maillage sont identiques ou similaires. La distance la plus courte entre deux emplacements $P_k$ contigus est par exemple comprise entre 1 mm et 100 mm ou entre 3 mm et 20 mm. Ici, la distance la plus courte entre deux emplacements $P_k$ contigus est comprise entre 5 mm et 10 mm. Le nombre $N_{pk}$ d'emplacements $P_k$ est typiquement proportionnel à la surface de la structure 4. Par exemple, le nombre $N_{pk}$ est pris égal au ratio $S_4/S_{ref}$, où :

- $S_4$ est la surface de la structure 4, et
- $S_{ref}$ est une surface de référence, par exemple, comprise entre $10^{-2}$ m$^2$ et 1 m$^2$.

Les coordonnées dans le repère R de chaque emplacement $P_k$ sont connues et mémorisées dans la mémoire 16.

A chaque fois que le signal $S_c(t)$ est appliqué à un emplacement $P_k$, chaque capteur $C_j$ mesure le signal ultrasonore $F_{j,k}(w)$ généré par le signal $S_c(t)$ qui se propage dans la structure 4. Le signal ultrasonore $F_{j,k}(w)$ est relié au signal acoustique $S_c(t)$ par la relation suivante : $F_{j,k}(w) = R_j(w)G_{j,k}(w)S_c(w)$, où :

- k est un indice identifiant l'emplacement $P_k$ dont les coordonnées sont connues,
- $F_{j,k}(w)$ est la transformée de Fourier du signal ultrasonore $F_{j,k}(t)$ mesuré dans le domaine temporel par le capteur $C_j$ lorsque le signal acoustique connu $S_c(t)$ est appliqué à l'emplacement $P_k$,
- $S_c(w)$ est la transformée de Fourier du signal acoustique connu $S_c(t)$ appliqué à l'emplacement $P_k$,
- $R_j(w)$ est la réponse, dans le domaine fréquentiel, du capteur $C_j$,
- $G_{j,k}(w)$ est la fonction, dans le domaine fréquentiel, de propagation du signal acoustique connu $S_c(t)$ dans la structure 4 entre l'emplacement $P_k$ et l'emplacement du capteur $C_j$.

Ensuite, pour chaque emplacement $P_k$ où le signal $S_c(t)$ a été appliqué, le produit $R_j(w)G_{j,k}(w)$ des fonctions $R_j(w)$ et $G_{j,k}(w)$, est enregistré dans la mémoire 16 en association avec l'identifiant j du capteur $C_j$ et l'emplacement $P_k$ où a été appliqué le signal $S_c(t)$. Le produit $R_j(w)G_{j,k}(w)$ est égal au ratio $F_{j,k}(w)/S_c(w)$ du signal ultrasonore $F_{j,k}(w)$ mesuré par le capteur $C_j$ et du signal acoustique connu $S_c(w)$.

La phase 82 est identique à la phase 52 d'utilisation sauf que l'étape 58 de reconstruction est remplacée par une étape 88 de reconstruction. L'étape 88 de reconstruction comporte :

- une opération 90 de sélection, dans la mémoire 16, des produits $R_j(w)G_{j,k}(w)$ mémorisés, et
- une opération 92 de détermination de l'estimation $S_e(w)$ du signal $S(w)$.

Lors de l'opération 90, le calculateur 10 sélectionne les produits $R_j(w)G_{j,k}(w)$ associés à l'emplacement $P_k$ le plus proche de la position $P_s$ obtenue à l'issue de l'étape 56 de localisation.

Lors de l'opération 92, l'estimation $S_e(w)$ est construite seulement à partir des produits $R_j(w)G_{j,k}(w)$ sélectionnés lors de l'opération 90. Plus précisément, ici, l'estimation $S_e(w)$ est construite à partir des termes $(R_j(w)G_{j,k}(w))^*F_j(w)$ de façon similaire à ce qui a été décrit dans le cas de l'opération 62. Par exemple, l'estimation $S_e(w)$ est construite à l'aide de la relation suivante :

$$S_e(w) = \frac{1}{N} \sum_{j=1}^{N} \left( R_j(w) G_{j,k}(w) \right)^* F_j(w)$$

où les produits $R_j(w)G_{j,k}(w)$ sont ceux sélectionnés lors de l'opération 90.

[ CHAPITRE II : Variantes

Variantes de la reconstruction « aveugle » :

Les valeurs des poids $W_j$ peuvent être différentes. En particulier, dans un mode de réalisation simplifié, les valeurs des poids $W_j$ ne dépendent pas de la position $P_s$ du défaut. Par exemple, les poids $W_j$ sont des constantes toutes égales à +1. Dans ce cas, l'étape 56 de localisation peut être omise. De plus, lorsque la localisation du défaut est omise, le nombre N de capteurs $C_j$ peut être inférieur à trois. Par exemple, le nombre N de capteurs $C_j$ est égal à deux.

Les valeurs des poids $W_j$ peuvent aussi être déterminées en fonction des caractéristiques physiques de la structure 4 comme, par exemple, la dispersion théorique des ondes guidées dans la structure. Dans ce dernier cas, les poids $W_j$ dépendent des caractéristiques physiques de la structure de sorte que le procédé d'identification est spécifiquement configuré pour identifier un signal acoustique dans cette structure.

En variante, au lieu d'utiliser une rétro-propagation des signaux mesurés par les capteurs pour obtenir l'estimation du signal $S_e(w)$, il est possible d'utiliser un filtrage inverse (« inverse filtering » en anglais) comme décrit dans l'article Sabra2004. Dans ce dernier cas, ce sont les termes $F_j(w)/(R_j(w)G_{e,j}(w))$ qui sont utilisés pour construire l'estimation $S_e(w)$ au lieu d'utiliser les termes $(R_j(w)G_{e,j}(w))^*F_j(w)$. Dans ce cas, l'estimation $S_e(w)$ est obtenue à l'aide de la relation suivante :

$$S_e(w) = \frac{1}{N}\sum_{j=1}^{N} F_j(w)/\left(R_j(w)G_{e,j}(w)\right)$$

Dans ce dernier cas, de préférence, la bande passante de l'estimation $S_e(w)$ est limitée pour exclure les fréquences fortement atténuées, par exemple les fréquences élevées atténuées par la structure 4. Autrement dit, au-delà d'une fréquence de coupure $f_c$ prédéterminée, l'estimation $S_e(w)$ est nulle. Cela permet de limiter la sensibilité au bruit de l'estimation $S_e(w)$. En effet, pour les fréquences supérieures à $f_c$, le produit $R_j(w)G_{e,j}(w)$ est proche de zéro, de sorte que le bruit est fortement amplifié au-delà de la fréquence $f_c$ si la bande passante de l'estimation $S_e(w)$ n'est pas limitée.

L'étape de reconstruction peut être réalisée en utilisant d'autres méthodes de reconstruction « aveugle » que celle décrite. De nombreux exemples d'autres méthodes de reconstruction « aveugle » peuvent être trouvés dans le domaine de la déconvolution de source aveugle plus connu sous le terme anglais de « blind source deconvolution ».

L'estimation $S_e(w)$ peut aussi être construite à partir d'une somme pondérée des termes $(R_j(w)G_{e,j}(w))^*F_j(w)$ ou $F_j(w)/(R_j(w)G_{e,j}(w))$. Par exemple, l'estimation $S_e(w)$ est construite à l'aide de la relation suivante :

$$S_e(w) = \sum_{j=1}^{N} q_j \left(R_j(w)G_{e,j}(w)\right)^* F_j(w)$$

où $q_j$ est un coefficient de pondération. La somme des coefficients $q_j$ est égale à un. Par exemple, plus le capteur $C_j$ est proche de la position $P_s$, plus le coefficient $q_j$ est grand de manière à donner plus de poids aux mesures des capteurs qui sont les plus proches du défaut. Dans un cas simplifié, seuls les coefficients $q_j$ des M capteurs $C_j$ les plus proches sont non-nuls et les coefficients $q_j$ est (N-M) capteurs $C_j$ restants sont nuls, où M est un nombre entier inférieur à N. Par exemple, M est égal à un ou deux ou trois.

En variante, la réponse $R_j(w)$ n'est pas une constante égale à un et l'estimation $S_e(w)$ est construite à l'aide de la relation suivante :

$$S_e(w) = \frac{1}{N}\sum_{j=1}^{N} \left(R_j(w)G_{e,j}(w)\right)^* F_j(w)$$

Pour cela, si la réponse impulsionnelle de chaque capteur $C_j$ est connue, alors $R_j(w)$ peut être construit à partir de cette réponse impulsionnelle connue. La réponse $R_j(w)$ de chaque capteur $C_j$ peut aussi être mesurée. Dans ces derniers cas, la réponse $R_j(w)$ n'est généralement pas une constante.

Variantes de la reconstruction par apprentissage :

Le signal acoustique connu appliqué peut être généré par une autre source acoustique qu'une source de Hsu-Nielsen. Par exemple, le signal acoustique connu peut aussi être généré par un émetteur acoustique électronique.

Lors de l'étape d'apprentissage, en variante, ce n'est pas le même signal acoustique connu qui est appliqué à chaque emplacement $P_k$. Dans ce cas, le produit mémorisé en association avec chaque emplacement $P_k$ est obtenu à l'aide de la relation suivante : $R_j(w)G_{j,k}(w) = F_{j,k}(w)/S_{c,k}(w)$, où $S_{c,k}(w)$ est le signal acoustique appliqué à l'emplacement $P_k$.

Comme dans le cas de la reconstruction «aveugle», l'estimation $S_e(w)$ peut aussi être construite par filtrage inverse. Elle peut aussi être construite à partir d'une somme pondérée ou non des termes $(R_j(w)G_{j,k}(w))^*F_j(w)$ ou $F_j(w)/(R_j(w)G_{j,k}(w))$.

Les données utilisées lors de l'étape 80 d'apprentissage peuvent être issues de simulations numériques.

Variantes communes à tous les modes de réalisation :

Une étape de pré-traitement des signaux ultrasonores $F_j(t)$ mesurés par les capteurs $C_j$ peut être réalisée avant l'étape de localisation et/ou avant l'étape de reconstruction afin de réaliser ces étapes sur des signaux ultrasonores prétraités et non pas sur les signaux ultrasonores brutes directement délivrés par les capteurs. Des exemples de prétraitements qui peuvent être appliqués aux signaux ultrasonores brutes $F_j(t)$ sont par exemple décrits dans la section 2.1 de l'article Morizet2016.

D'autres modes de réalisation de l'étape 56 de localisation sont possibles. Par exemple, en variante, la localisation de la position $P_s$ du défaut est obtenue en implémentant la méthode décrite dans l'article suivant : Pearson M. R. et AL : « Improved acoustic émission source location during fatigue and impact events in metallic and composite structures », Structural Health Monitoring, vol. 16(4), pages 382-399, 2017. De plus, cet article décrit aussi une autre méthode pour relever les instants $t_j$ d'arrivée.

Si la célérité c à laquelle se propage le signal S(t) à l'intérieur de la structure 4 est connue, il n'est alors pas nécessaire de la déterminer lors de l'étape 56 de localisation. Par exemple, la célérité c connue est pré-enregistrée dans la mémoire 16.

Lorsque l'estimation $S_e(w)$ est construite à partir des termes $F_j(w)/(R_j(w)G_{e,j}(w))$ ou $F_j(w)/(R_j(w)G_{j,k}(w))$, si le dénominateur de ces fractions est proche de zéro dans une plage de fréquences, alors cette plage de fréquences est exclue et n'est pas prise en compte lors de l'étape de classification. Une telle situation peut se rencontrer, par exemple, lorsque la structure atténue fortement la propagation des ondes à des fréquences supérieures à $f_{max}$. Par exemple, si le produit $R_j(w)G_{e,j}(w)$ ou $R_j(w)G_{j,k}(w)$ est inférieure à 0,1 au-delà de la fréquence $f_{max}$, alors l'estimation $S_e(w)$ est limitée à la plage de fréquences $[0 ; f_{max}]$. Cela permet de travailler dans la plage de fréquences où le rapport signal sur bruit est bon et d'exclure la plage de fréquences où ce rapport signal sur bruit est mauvais. En fin de compte, cela améliore la robustesse du procédé d'identification.

D'autres modes de réalisation de l'étape 72 de réduction de la dimensionnalité sont possibles. Par exemple, d'autres caractéristiques que celles citées dans l'article Morizet2016 peuvent être utilisées en plus ou à la place des caractéristiques citées dans cet article. Il est aussi possible d'utiliser un plus petit ou un plus grand nombre de caractéristiques physiques. Il est aussi possible de réduire le nombre d'informations à traiter lors de l'étape de classification par d'autres méthodes que l'extraction de caractéristiques physiques. Par exemple, des méthodes mathématiques comme la méthode d'analyse en composantes principales peuvent être utilisées pour réaliser l'étape de réduction de dimensionnalité. Une brève description de cette méthode peut être trouvée dans la section 3.1 de l'article Pashmforoush2012.

L'étape de réduction de dimensionnalité peut aussi être omise. Dans ce cas, aucune réduction du nombre d'échantillons du signal $S_e(w)$ ou $S_e(t)$ traité n'est réalisée avant l'étape de classification.

D'autres méthodes de classification que celle précédemment décrites peuvent être mises en oeuvre pour identifier la source acoustique. Par exemple, il est aussi possible d'utiliser la méthode KGA (« K-means Genetic Algorithm » en anglais) ou la méthode WPT (« Wavelet Packet Transform ») toutes les deux décrites dans l'article Pashmfouroush2012. La méthode espérance-maximisation connue sous l'acronyme EM (« expectation-maximization algorithm ») ou encore les méthodes de classification non-supervisées décrites dans l'article Sawan2015 peuvent aussi être utilisées.

Des méthodes de classification supervisée peuvent aussi être mises en oeuvre. Par exemple, la méthode « Random Forest », décrite dans l'article Morizet2016 peut être implémentée. Les méthodes de classification supervisée suivantes sont aussi utilisables : k-NN (« k-Nearest Neighbors »), SVM (« Support Vector Machine »), un réseau de neurones artificiels et d'autres.

La classification peut être réalisée à partir de l'estimation $S_e(w)$ seule. Dans ce cas, l'étape 70 de construction de l'estimation $S_e(t)$ peut être omise. A l'inverse, la classification peut aussi être faite seulement à partir du signal $S_e(t)$.

Autres variantes :

La structure n'est pas nécessairement un tube en matériau composite. Ce qui a été décrit ici s'applique à d'autres structures comme par exemple :

- des plaques, par exemple en métal ou en matériau composite,
- des structures en béton comme des piles de pont.

Le microprocesseur 14 peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

Plusieurs des variantes décrites ici peuvent être combinées dans un même mode de réalisation.

CHAPITRE III : Avantages des modes de réalisation décrits

Le fait d'utiliser directement l'estimation du signal acoustique S(t) produit au niveau de la position $P_s$ pour la classification à la place des signaux ultrasonores mesurés, permet de rendre la classification plus robuste et donc d'augmenter la fiabilité du procédé d'identification du signal acoustique. En particulier, cela permet de diminuer l'influence des distorsions du signal acoustique qui se produisent lorsqu'il se propage dans la structure pour atteindre les emplacements $P_j$ où il est mesuré par les capteurs $C_j$. Grâce à cela, les procédés d'identification décrits ici sont applicables à toute structure et, en particulier, à des structures de grandes dimensions dans lesquelles le signal acoustique parcourt une distance importante avant d'atteindre les capteurs $C_j$.

Le fait d'utiliser les estimations $G_{e,j}(w)$ des fonctions $G_j(w)$ de propagation permet d'améliorer la robustesse de l'identification de la source acoustique sans pour cela nécessiter l'exécution d'une étape d'apprentissage lors de laquelle différentes fonctions $G_{j,k}(w)$ sont mesurées pour différentes positions $P_k$ possibles du défaut et pour un signal acoustique connu. De plus, puisque les estimations $G_{e,j}(w)$ sont construites à chaque fois que les signaux $F_j(t)$ sont mesurés, ces estimations $G_{e,j}(w)$ suivent et s'adaptent automatiquement aux variations des fonctions $G_j(w)$. En effet, les fonctions $G_j(w)$ peuvent varier dans le temps notamment en fonction de l'état de la structure et des conditions environnementales dans lesquelles est placée la structure.

Le fait d'utiliser des poids $W_j$ dont les valeurs sont fonction de la distance qui sépare l'emplacement $P_j$ et la position $P_s$, permet d'améliorer la précision de l'estimation $S_e(w)$ et donc d'améliorer la fiabilité du procédé décrit. De plus, dans ce cas, les valeurs des poids $W_j$ sont indépendantes des caractéristiques de la structure instrumentée. Ainsi, dans ce cas, le procédé d'identification fonctionne avec tout type de structure et pas seulement avec des tuyaux ou des structures planes comme des plaques.

Le fait que la réponse, dans le domaine fréquentiel, de chaque capteur soit assimilée à une constante égale à un, simplifie la mise en oeuvre du procédé d'identification.

L'étape d'apprentissage des produits $R_j(w)G_{j,k}(w)$ permet de construire une estimation précise du signal $S_e(w)$ et donc d'obtenir un procédé d'identification robuste.

**Revendications**

1. Procédé d'identification automatique d'une source acoustique à partir d'un signal acoustique S(t) produit par l'apparition ou l'évolution d'un défaut dans une structure, ce procédé comportant les étapes suivantes :

   a) l'instrumentation (50) de la structure en fixant sur cette structure au moins un capteur, puis
   b) la mesure (54), par le capteur, d'un signal ultrasonore $F_j(t)$ causé par le signal acoustique produit par l'apparition ou l'évolution du défaut dans la structure, ce signal ultrasonore mesuré étant relié, dans le domaine fréquentiel, au signal acoustique produit par la relation suivante : $F_j(w) = R_j(w)G_j(w)S(w)$, où :

      - j est un indice identifiant le capteur,
      - w est la pulsation en radian,
      - $F_j(w)$ est la transformée de Fourier du signal ultrasonore $F_j(t)$ mesuré dans le domaine temporel par le capteur j,
      - S(w) est la transformée de Fourier du signal acoustique S(t) produit par l'apparition ou l'évolution du défaut dans la structure,
      - $R_j(w)$ est la réponse, dans le domaine fréquentiel, du capteur j,
      - $G_j(w)$ est la fonction, dans le domaine fréquentiel, de propagation du signal acoustique dans la structure entre la position du défaut et l'emplacement du capteur j,

      puis
      c) la classification automatique (76) de la source acoustique dans une classe de sources acoustiques choisie parmi plusieurs classes de sources acoustiques possibles, **caractérisé en ce que** :

      - le procédé comporte également entre les étapes b) et c), une étape d) de reconstruction (58 ; 88) du signal acoustique produit lors de l'apparition ou l'évolution du défaut, cette étape de reconstruction comportant la construction d'une estimation $S_e(w)$ du signal produit au niveau de la position du défaut à partir du signal ultrasonore $F_j(t)$ mesuré par le capteur et à l'aide d'une estimation ou d'une mesure du produit

$R_j(w)G_j(w)$ qui relie, dans le domaine fréquentiel, le signal ultrasonore $F_j(w)$ mesuré au signal acoustique $S(w)$ produit, et
- la classification automatique est réalisée à partir de l'estimation du signal acoustique obtenue à l'issue de l'étape d).

**2.** Procédé selon la revendication 1, dans lequel :

- l'étape a) d'instrumentation comporte la fixation sur la structure d'au moins trois capteurs à des emplacements dont les coordonnées sont connues dans un repère fixe par rapport à la structure,
- l'étape b) comporte la mesure (54), par chacun des capteurs, d'un signal ultrasonore $F_j(t)$ respectif causé par le signal acoustique produit par l'apparition ou l'évolution du défaut dans la structure, chacun des signaux ultrasonores mesurés étant relié, dans le domaine fréquentiel, au signal acoustique produit par la relation suivante : $F_j(w) = R_j(w)G_j(w)S(w)$,
- le procédé comporte entre les étapes b) et d), une étape de localisation (56), dans le repère fixe, de la position du défaut qui a produit le signal acoustique à partir des mesures réalisées par les capteurs lors de l'étape b) et des coordonnées connues de ces capteurs dans ce repère fixe, et
- l'étape d) de reconstruction comporte l'obtention de l'estimation ou de la mesure du produit $R_j(w)G_j(w)$ à l'aide de la position du défaut obtenue à l'issue de l'étape de localisation.

**3.** Procédé selon l'une quelconque des revendications précédentes, dans lequel l'étape d) de reconstruction comporte :

- pour chaque capteur, une opération (60) de construction d'une estimation $G_{e,j}(w)$ de la fonction $G_j(w)$ de propagation du signal acoustique dans la structure entre la position où le défaut apparaît et l'emplacement de ce capteur, à l'aide de la relation suivante :

$$G_{e,j}(w) = \frac{F_j(w)}{\sqrt{\sum_{a=1}^{N} F_a(w)^2}} e^{-i\Gamma}$$

où $\Gamma$ est une phase définie par la relation suivante :

$$\Gamma = arg \sum_{j=1}^{N} W_j F_j(w)$$

où :

- « arg » est la fonction qui retourne l'argument d'un nombre complexe, et
- $W_j$ sont des poids prédéfinis, puis

- la construction (62) de l'estimation $S_e(w)$ du signal $S(w)$ à partir des termes $(R_j(w)G_{e,j}(w))^*F_j(w)$ ou des termes $F_j(w)/(R_j(w)G_{e,j}(w))$, où le symbole «$(...)^*$» désigne le conjugué de la fonction complexe entre parenthèses.

**4.** Procédé selon les revendications 2 et 3 prises ensemble, dans lequel chaque poids $W_j$ est défini par la relation suivante :

$$W_j = e^{\frac{-i\|P_s - P_j\|}{c}w}$$

où :

- $P_s$ sont les coordonnées dans le repère fixe du défaut obtenues à l'issue de l'étape de localisation,
- $P_j$ sont les coordonnées dans le repère fixe du capteur j,

- c est la célérité à laquelle se propage le signal acoustique à l'intérieur de la structure, et
- w est la pulsation en radian.

**5.** Procédé selon l'une quelconque des revendications 2 à 4, dans lequel chaque fonction $R_j(w)$ est égale à un quelle que soit la valeur de la pulsation w.

**6.** Procédé selon l'une quelconque des revendications 3 à 5, dans lequel la fonction $G_{e,j}(w)$ de propagation est une fonction de Green.

**7.** Procédé selon la revendication 2, dans lequel :

- avant l'étape d) de reconstruction, le procédé comporte une étape (80) d'apprentissage du produit $R_j(w)G_j(w)$ des fonctions $R_j(w)$ et $G_j(w)$ pour différents emplacements possibles du défaut, cette étape d'apprentissage comportant les opérations suivantes :

   i) pour chaque capteur, la mesure ou l'estimation par simulation numérique d'un signal ultrasonore $F_{j,k}(t)$ mesuré par ce capteur lorsqu'un signal acoustique connu $S_{c,k}(t)$ est appliqué sur la structure en un emplacement $P_k$ dont les coordonnées sont connues dans le repère fixe, chacun des signaux ultrasonores $F_{j,k}(t)$ étant relié, dans le domaine fréquentiel, au signal acoustique connu $S_{c,k}(t)$ par la relation suivante : $F_{j,k}(w) = R_j(w)G_{j,k}(w)S_{c,k}(w)$, où :

   - k est un indice identifiant l'emplacement $P_k$ dont les coordonnées sont connues,
   - $F_{j,k}(w)$ est la transformée de Fourier du signal ultrasonore $F_{j,k}(t)$ mesuré ou estimé dans le domaine temporelle par le capteur j lorsque le signal acoustique connu est appliqué à l'emplacement $P_k$,
   - $S_{c,k}(w)$ est la transformée de Fourier du signal acoustique connu $S_{c,k}(t)$ appliqué à l'emplacement $P_k$,
   - $R_j(w)$ est la réponse, dans le domaine fréquentiel, du capteur j,
   - $G_{j,k}(w)$ est la fonction, dans le domaine fréquentiel, de propagation du signal acoustique connu $S_{c,k}(t)$ dans la structure entre l'emplacement $P_k$ et l'emplacement du capteur j, puis

   ii) pour chaque capteur, la mémorisation, en association avec le capteur j et les coordonnées de l'emplacement $P_k$, du produit $R_j(w)G_{j,k}(w)$ des fonctions $R_j(w)$ et $G_{j,k}(w)$, le produit $R_j(w)G_{j,k}(w)$ étant obtenu à l'aide de la relation suivante :

$$R_j(w)G_{j,k}(w) = F_{j,k}(w)/S_{c,k}(w),$$

   iii) la répétition des opérations i) et ii) pour plusieurs emplacements $P_k$ possibles,

- l'étape d) de reconstruction (88) comporte les opérations suivantes :

   iv) la sélection (90) des produits $R_j(w)G_{j,k}(w)$ mémorisés en association avec l'emplacement $P_k$ le plus proche de la position du défaut obtenue à l'issue de l'étape de localisation, puis
   v) la détermination (92) de l'estimation $S_e(w)$ du signal $S(w)$ à partir des termes $(R_j(w)G_{j,k}(w))^*F_j(w)$ ou des termes $F_j(w)/(R_j(w)G_{j,k}(w))$, où :

   - les produits $R_j(w)G_{j,k}(w)$ sont ceux sélectionnés lors de l'opération iv), et
   - le symbole «(...)*» désigne le conjugué de la fonction complexe entre parenthèses.

**8.** Procédé selon l'une quelconque des revendications précédentes, dans lequel :

- le procédé comporte la construction de l'estimation $S_e(t)$, dans le domaine temporel, du signal acoustique $S(t)$ en appliquant une transformation de Fourier inverse à l'estimation $S_e(w)$, puis
- la classification automatique est réalisée à partir de l'estimation $S_e(t)$ dans le domaine temporel.

**9.** Procédé selon l'une quelconque des revendications précédentes, dans lequel le procédé comporte une étape (72) de réduction de dimensionnalité lors de laquelle des caractéristiques physiques propres au signal produit au niveau de la position du défaut sont extraites à partir de l'estimation $S_e(w)$ construite lors de l'étape d) de reconstruction, puis lors de l'étape c) de classification automatique, la classification automatique est réalisée à partir des caractéristiques extraites lors de l'étape (72) de réduction de dimensionnalité.

10. Support d'enregistrement d'informations lisible par un microprocesseur, **caractérisé en ce qu'**il comporte des instructions non-transitoires qui conduisent l'appareil selon la revendication 11 à exécuter les étapes b) à d) d'un procédé d'identification conforme à l'une quelconque des revendications précédentes.

11. Appareil d'identification automatique d'une source acoustique à partir d'un signal acoustique S(t) produit par l'apparition ou l'évolution d'un défaut dans une structure, cet appareil comportant :

- au moins un capteur ($C_j$) fixé sur cette structure, ce capteur étant apte à mesurer un signal ultrasonore $F_j(t)$ causé par le signal acoustique produit par l'apparition ou l'évolution du défaut dans la structure, ce signal ultrasonore mesuré étant relié, dans le domaine fréquentiel, au signal acoustique produit par la relation suivante : $F_j(w) = R_j(w)G_j(w)S(w)$, où :

- j est un indice identifiant le capteur,
- w est la pulsation en radian,
- $F_j(w)$ est la transformée de Fourier du signal ultrasonore $F_j(t)$ mesuré dans le domaine temporel par le capteur j,
- S(w) est la transformée de Fourier du signal acoustique S(t) produit par l'apparition ou l'évolution du défaut dans la structure,
- $R_j(w)$ est la réponse, dans le domaine fréquentiel, du capteur j,
- $G_j(w)$ est la fonction, dans le domaine fréquentiel, de propagation du signal acoustique dans la structure entre la position où le défaut apparaît et l'emplacement du capteur j,

- un calculateur électronique (10) configuré pour exécuter les étapes suivantes :

- l'acquisition des mesures du capteur, puis
- la classification automatique de la source acoustique dans une classe de sources acoustiques choisie parmi plusieurs classes de sources acoustiques possibles,

**caractérisé en ce que** le calculateur électronique (10) est également configuré pour :

- avant la classification automatique, exécuter une étape de reconstruction du signal acoustique produit lors de l'apparition ou l'évolution du défaut, cette étape de reconstruction comportant la construction d'une estimation du signal produit au niveau de la position du défaut à partir du signal ultrasonore $F_j(t)$ mesuré par le capteur et à l'aide d'une estimation ou d'une mesure du produit $R_j(w)G_j(w)$ qui relie, dans le domaine fréquentiel, le signal ultrasonore $F_j(w)$ mesuré au signal acoustique S(w) produit, et
- la classification automatique est réalisée à partir de l'estimation du signal acoustique obtenue à l'issue de l'étape de reconstruction.

**Patentansprüche**

1. Verfahren zur automatischen Identifizierung einer akustischen Quelle ausgehend von einem akustischen Signal S(t), das durch das Auftreten oder das Fortschreiten eines Fehlers in einer Struktur erzeugt wird, wobei dieses Verfahren die folgenden Schritte umfasst:

a) das Instrumentieren (50) der Struktur, indem an dieser Struktur mindestens ein Sensor fixiert wird, dann
b) das Messen (54), durch den Sensor, eines Ultraschallsignals $F_j(t)$, das durch das akustische Signal verursacht wird, das durch das Auftreten oder das Fortschreiten des Fehlers in der Struktur erzeugt wird, wobei dieses gemessene Ultraschallsignal, in dem Frequenzbereich, mit dem erzeugten akustischen Signal durch die folgende Gleichung verknüpft ist: $F_j(w) = R_j(w)G_j(w)S(w)$, worin:

- j ein Index ist, der den Sensor kennzeichnet,
- w die Kreisfrequenz in Radiant ist,
- $F_j(w)$ die Fourier-Transformierte des Ultraschallsignals $F_j(t)$ ist, das in dem Zeitbereich von dem Sensor j gemessen wird,
- S(w) die Fourier-Transformierte des akustischen Signals S(t) ist, das durch das Auftreten oder das Fortschreiten des Fehlers in der Struktur erzeugt wird,
- $R_j(w)$ die Antwort, in dem Frequenzbereich, des Sensors j ist,
- $G_j(w)$ die Ausbreitungsfunktion, in dem Frequenzbereich, des akustischen Signals in der Struktur zwischen der Position des Fehlers und dem Ort des Sensors j ist, dann

c) das automatische Klassifizieren (76) der akustischen Quelle in eine Klasse akustischer Quellen, die unter mehreren möglichen Klassen akustischer Quellen ausgewählt ist, **dadurch gekennzeichnet, dass**:

- das Verfahren auch, zwischen den Schritten b) und c), einen Schritt d) des Rekonstruierens (58; 88) des akustischen Signals umfasst, das bei dem Auftreten oder dem Fortschreiten des Fehlers erzeugt wird, wobei dieser Schritt des Rekonstruierens das Konstruieren einer Schätzung $S_e(w)$ des an der Position des Fehlers erzeugten Signals ausgehend von dem Ultraschallsignal $F_j(t)$, das von dem Sensor gemessen wird, und mithilfe einer Schätzung oder einer Messung des Produkts $R_j(w)G_j(w)$ umfasst, das, in dem Frequenzbereich, das gemessene Ultraschallsignal $F_j(w)$ mit dem erzeugten akustischen Signal $S(w)$ verknüpft, und
- das automatische Klassifizieren ausgehend von der nach dem Schritt d) erhaltenen Schätzung des akustischen Signals ausgeführt wird.

2. Verfahren nach Anspruch 1, wobei:

- der Schritt a) des Instrumentierens das Fixieren von mindestens drei Sensoren an der Struktur an Orten umfasst, deren Koordinaten in einem in Bezug auf die Struktur feststehenden Bezugssystem bekannt sind,
- der Schritt b) das Messen (54), durch jeden der Sensoren, eines jeweiligen Ultraschallsignals $F_j(t)$ umfasst, das durch das akustische Signal verursacht wird, das durch das Auftreten oder das Fortschreiten des Fehlers in der Struktur erzeugt wird, wobei jedes der gemessenen Ultraschallsignale, in dem Frequenzbereich, mit dem erzeugten akustischen Signal durch die folgende Gleichung verknüpft ist: $F_j(w) = R_j(w)G_j(w)S(w)$,
- das Verfahren zwischen den Schritten b) und d) einen Schritt des Ortens (56), in dem feststehenden Bezugssystem, der Position des Fehlers, der das akustische Signal erzeugt hat, ausgehend von den Messungen, die von den Sensoren bei dem Schritt b) ausgeführt werden, und den bekannten Koordinaten dieser Sensoren in diesem feststehenden Bezugssystem umfasst und
- der Schritt d) des Rekonstruierens das Erhalten der Schätzung oder der Messung des Produkts $R_j(w)G_j(w)$ mithilfe der nach dem Schritt des Ortens erhaltenen Position des Fehlers umfasst.

3. Verfahren nach einem der vorhergehenden Ansprüche, wobei der Schritt d) des Rekonstruierens umfasst:

- für jeden Sensor, einen Vorgang (60) des Konstruierens einer Schätzung $G_{e,j}(w)$ der Ausbreitungsfunktion $G_j(w)$ des akustischen Signals in der Struktur zwischen der Position, an welcher der Fehler auftritt, und dem Ort dieses Sensors mithilfe der folgenden Gleichung:

$$G_{e,j}(w) = \frac{F_j(w)}{\sqrt{\sum_{a=1}^{N} F_a(w)^2}} e^{-i\Gamma}$$

worin $\Gamma$ eine Phase ist, die durch die folgende Gleichung definiert wird:

$$\Gamma = arg \sum_{j=1}^{N} W_j F_j(w)$$

worin:

- "arg" die Funktion ist, die das Argument einer komplexen Zahl zurückgibt, und
- $W_j$ vorgegebene Gewichtungen sind, dann

- das Konstruieren (62) der Schätzung $S_e(w)$ des Signals $S(w)$ ausgehend von den Termen $(R_j(w)G_{e,j}(w))^*F_j(w)$ oder von den Termen $F_j(w)/(R_j(w)G_{e,j}(w))$, worin das Symbol "(...)*" die Konjugierte der komplexen Funktion in Klammern bezeichnet.

4. Verfahren nach den Ansprüchen 2 und 3 zusammengenommen, wobei jede Gewichtung $W_j$ durch die folgende Gleichung definiert wird:

$$W_j = e^{\frac{-i\,\|P_s - P_j\|}{c}\,w}$$

worin:

- $P_s$ die nach dem Schritt des Ortens erhaltenen Koordinaten des Fehlers in dem feststehenden Bezugssystem sind,
- $P_j$ die Koordinaten des Sensors j in dem feststehenden Bezugssystem sind,
- c die Geschwindigkeit ist, mit der sich das akustische Signal innerhalb der Struktur ausbreitet, und
- w die Kreisfrequenz in Radiant ist.

5. Verfahren nach einem der Ansprüche 2 bis 4, wobei jede Funktion $R_j(w)$ unabhängig von dem Wert der Kreisfrequenz w gleich eins ist.

6. Verfahren nach einem der Ansprüche 3 bis 5, wobei die Ausbreitungsfunktion $G_{e,j}(w)$ eine Green-Funktion ist.

7. Verfahren nach Anspruch 2, wobei:

- das Verfahren, vor dem Schritt d) des Rekonstruierens, einen Schritt (80) des Lernens des Produkts $R_j(w)G_j(w)$ der Funktionen $R_j(w)$ und $G_j(w)$ für verschiedene mögliche Orte des Fehlers umfasst, wobei dieser Schritt des Lernens die folgenden Vorgänge umfasst:

   i) für jeden Sensor, das Messen oder das Schätzen durch numerische Simulation eines Ultraschallsignals $F_{j,k}(t)$, das von diesem Sensor gemessen wird, wenn ein bekanntes akustisches Signal $S_{c,k}(t)$ an die Struktur an einem Ort $P_k$ angelegt wird, dessen Koordinaten in dem feststehenden Bezugssystem bekannt sind, wobei jedes der Ultraschallsignale $F_{j,k}(t)$, in dem Frequenzbereich, mit dem bekannten akustischen Signal $S_{c,k}(t)$ durch die folgende Gleichung verknüpft ist: $F_{j,k}(w) = R_j(w)G_{j,k}(w)S_{c,k}(w)$, worin:

      - k ein Index ist, der den Ort $P_k$ kennzeichnet, dessen Koordinaten bekannt sind,
      - $F_{j,k}(w)$ die Fourier-Transformierte des Ultraschallsignals $F_{j,k}(t)$ ist, das in dem Zeitbereich von dem Sensor j gemessen oder geschätzt wird, wenn das bekannte akustische Signal an dem Ort $P_k$ angelegt wird,
      - $S_{c,k}(w)$ die Fourier-Transformierte des bekannten akustischen Signals $S_{c,k}(t)$ ist, das an dem Ort $P_k$ angelegt wird,
      - $R_j(w)$ die Antwort, in dem Frequenzbereich, des Sensors j ist,
      - $G_{j,k}(w)$ die Ausbreitungsfunktion, in dem Frequenzbereich, des bekannten akustischen Signals $S_{c,k}(t)$ in der Struktur zwischen dem Ort $P_k$ und dem Ort des Sensors j ist, dann

   ii) für jeden Sensor, das Speichern, in Verbindung mit dem Sensor j und den Koordinaten des Orts $P_k$, des Produkts $R_j(w)G_{j,k}(w)$ der Funktionen $R_j(w)$ und $G_{j,k}(w)$, wobei das Produkt $R_j(w)G_{j,k}(w)$ mithilfe der folgenden Gleichung erhalten wird: $R_j(w)G_{j,k}(w) = F_{j,k}(w)/S_{c,k}(w)$,
   iii) das Wiederholen der Vorgänge i) und ii) für mehrere mögliche Orte $P_k$,

- der Schritt d) des Rekonstruierens (88) die folgenden Vorgänge umfasst:

   iv) das Wählen (90) der Produkte $R_j(w)G_{j,k}(w)$, die in Verbindung mit dem Ort $P_k$ gespeichert sind, der zu der nach dem Schritt des Ortens erhaltenen Position des Fehlers nächstgelegen ist, dann
   v) das Bestimmen (92) der Schätzung $S_e(w)$ des Signals $S(w)$ ausgehend von den Termen

$(R_j(w)G_{j,k}(w))^*F_j(w)$ oder von den Termen $F_j(w)/(R_j(w)G_{j,k}(w))$, worin:

- die Produkte $R_j(w)G_{j,k}(w)$ diejenigen sind, die bei dem Vorgang iv) gewählt werden, und
- das Symbol "(...)*" die Konjugierte der komplexen Funktion in Klammern bezeichnet.

**8.** Verfahren nach einem der vorhergehenden Ansprüche, wobei:

- das Verfahren das Konstruieren der Schätzung $S_e(t)$, in dem Zeitbereich, des akustischen Signals $S(t)$ umfasst, indem eine inverse Fourier-Transformation auf die Schätzung $S_e(w)$ angewandt wird, dann
- das automatische Klassifizieren ausgehend von der Schätzung $S_e(t)$ in dem Zeitbereich ausgeführt wird.

**9.** Verfahren nach einem der vorhergehenden Ansprüche, wobei das Verfahren einen Schritt (72) des Reduzierens der Dimensionalität umfasst, bei dem spezifische physikalische Merkmale des an der Position des Fehlers erzeugten Signals ausgehend von der Schätzung $S_e(w)$ extrahiert werden, die bei dem Schritt d) des Rekonstruierens konstruiert wird, dann, bei dem Schritt c) des automatischen Klassifizierens, das automatische Klassifizieren ausgehend von den Merkmalen ausgeführt wird, die bei dem Schritt (72) des Reduzierens der Dimensionalität extrahiert werden.

**10.** Von einem Mikroprozessor lesbares Medium zur Aufzeichnung von Informationen, **dadurch gekennzeichnet, dass** es nicht-transitorische Anweisungen umfasst, die das Gerät nach Anspruch 11 veranlassen, die Schritte b) bis d) eines Verfahrens zur Identifizierung nach einem der vorhergehenden Ansprüche auszuführen.

**11.** Gerät zur automatischen Identifizierung einer akustischen Quelle ausgehend von einem akustischen Signal $S(t)$, das durch das Auftreten oder das Fortschreiten eines Fehlers in einer Struktur erzeugt wird, wobei dieses Gerät umfasst:

- mindestens einen Sensor ($C_j$), der an dieser Struktur fixiert ist, wobei dieser Sensor geeignet ist, ein Ultraschallsignal $F_j(t)$ zu messen, das durch das akustische Signal verursacht wird, das durch das Auftreten oder das Fortschreiten des Fehlers in der Struktur erzeugt wird, wobei dieses gemessene Ultraschallsignal, in dem Frequenzbereich, mit dem erzeugten akustischen Signal durch die folgende Gleichung verknüpft ist: $F_j(w) = R_j(w)G_j(w)S(w)$, worin:

  - j ein Index ist, der den Sensor kennzeichnet,
  - w die Kreisfrequenz in Radiant ist,
  - $F_j(w)$ die Fourier-Transformierte des Ultraschallsignals $F_j(t)$ ist, das in dem Zeitbereich von dem Sensor j gemessen wird,
  - $S(w)$ die Fourier-Transformierte des akustischen Signals $S(t)$ ist, das durch das Auftreten oder das Fortschreiten des Fehlers in der Struktur erzeugt wird,
  - $R_j(w)$ die Antwort, in dem Frequenzbereich, des Sensors j ist,
  - $G_j(w)$ die Ausbreitungsfunktion, in dem Frequenzbereich, des akustischen Signals in der Struktur zwischen der Position, an welcher der Fehler auftritt, und dem Ort des Sensors j ist,

- einen elektronischen Rechner (10), der dazu ausgestaltet ist, die folgenden Schritte auszuführen:

  - das Erfassen der Messungen des Sensors, dann
  - das automatische Klassifizieren der akustischen Quelle in eine Klasse akustischer Quellen, die unter mehreren möglichen Klassen akustischer Quellen ausgewählt ist,

  **dadurch gekennzeichnet, dass** der elektronische Rechner (10) auch dazu ausgestaltet ist:

  - vor dem automatischen Klassifizieren einen Schritt des Rekonstruierens des akustischen Signals auszuführen, das bei dem Auftreten oder dem Fortschreiten des Fehlers erzeugt wird, wobei dieser Schritt des Rekonstruierens das Konstruieren einer Schätzung des an der Position des Fehlers erzeugten Signals ausgehend von dem Ultraschallsignal $F_j(t)$, das von dem Sensor gemessen wird, und mithilfe einer Schätzung oder einer Messung des Produkts $R_j(w)G_j(w)$ umfasst, das, in dem Frequenzbereich, das gemessene Ultraschallsignal $F_j(w)$ mit dem erzeugten akustischen Signal $S(w)$ verknüpft, und
  - das automatische Klassifizieren ausgehend von der nach dem Schritt des Rekonstruierens erhaltenen Schätzung des akustischen Signals ausgeführt wird.

**Claims**

1. Method for automatically identifying an acoustic source based on an acoustic signal S(t) produced by the occurrence or the evolution of a defect in a structure, this method comprising the following steps:

   a) kitting out (50) the structure by attaching at least one sensor to this structure, and then
   b) using the sensor to measure (54) an ultrasound signal $F_j(t)$ caused by the acoustic signal produced by the occurrence or the evolution of the defect in the structure, this measured ultrasound signal being linked, in the frequency domain, to the produced acoustic signal by the following relationship: $F_j(w) = R_j(w)G_j(w)S(w)$, where:

   - j is an index identifying the sensor,
   - w is the angular frequency in radians,
   - $F_j(w)$ is the Fourier transform of the ultrasound signal $F_j(t)$ measured in the time domain by the sensor j,
   - S(w) is the Fourier transform of the acoustic signal S(t) produced by the occurrence or the evolution of the defect in the structure,
   - $R_j(w)$ is the response, in the frequency domain, of the sensor j,
   - $G_j(w)$ is the propagation function, in the frequency domain, of the acoustic signal in the structure between the position of the defect and the location of the sensor j, and then

   c) automatically classifying (76) the acoustic source into a class of acoustic sources chosen from a plurality of possible classes of acoustic sources, **characterized in that**:

   - the method also comprises, between steps b) and c), a step d) of reconstructing (58; 88) the acoustic signal produced upon the occurrence or the evolution of the defect, this reconstruction step comprising constructing an estimate $S_e(w)$ of the signal produced at the position of the defect based on the ultrasound signal $F_j(t)$ measured by the sensor and using an estimate or a measurement of the product $R_j(w)G_j(w)$ that, in the frequency domain, links the measured ultrasound signal $F_j(w)$ to the produced acoustic signal S(w), and
   - the automatic classification is carried out based on the estimate of the acoustic signal obtained at the end of step d).

2. Method according to Claim 1, wherein:

   - kitting-out step a) comprises attaching at least three sensors to the structure at locations the coordinates of which are known in a fixed reference frame with respect to the structure;
   - step b) comprises using each of the sensors to measure (54) a respective ultrasound signal $F_j(t)$ caused by the acoustic signal produced by the occurrence or the evolution of the defect in the structure, each of the measured ultrasound signals being linked, in the frequency domain, to the produced acoustic signal by the following relationship: $F_j(w) = R_j(w)G_j(w)S(w)$,
   - the method comprises, between steps b) and d), a step (56) of locating, in the fixed reference frame, the position of the defect that produced the acoustic signal based on the measurements carried out by the sensors in step b) and the known coordinates of these sensors in this fixed reference frame, and
   - reconstruction step d) comprises obtaining the estimate or the measurement of the product $R_j(w)G_j(w)$ using the position of the defect obtained at the end of the locating step.

3. Method according to either one of the preceding claims, wherein reconstruction step d) comprises:

   - for each sensor, an operation (60) of constructing an estimate $G_{e,j}(w)$ of the propagation function $G_j(w)$ of the acoustic signal in the structure between the position where the defect occurs and the location of this sensor, using the following relationship:

$$G_{e,j}(w) = \frac{F_j(w)}{\sqrt{\sum_{a=1}^{N} F_a(w)^2}} e^{-i\Gamma}$$

where $\Gamma$ is a phase defined by the following relationship:

$$\Gamma = arg \sum_{j=1}^{N} W_j F_j(w)$$

where:

- "arg" is the function that returns the argument of a complex number, and
- $W_j$ are predefined weights, and then

- constructing (62) the estimate $S_e(w)$ of the signal $S(w)$ based on the terms $(R_j(w)G_{e,j}(w))^*F_j(w)$ or the terms $F_j(w)/(R_j(w)G_{e,j}(w))$, where the symbol "$(...)^*$" denotes the conjugate of the complex function between parentheses.

4. Method according to Claims 2 and 3 taken together, wherein each weight $W_j$ is defined by the following relationship:

$$W_j = e^{\frac{-i\|P_s - P_j\|}{c}w}$$

where:

- $P_s$ are the coordinates in the fixed reference frame of the defect, obtained at the end of the locating step,
- $P_j$ are the coordinates in the fixed reference frame of the sensor j,
- c is the speed at which the acoustic signal propagates inside the structure, and
- w is the angular frequency in radians.

5. Method according to any one of Claims 2 to 4, wherein each function $R_j(w)$ is equal to one regardless of the value of the angular frequency w.

6. Method according to any one of Claims 3 to 5, wherein the propagation function $G_{e,j}(w)$ is a Green function.

7. Method according to Claim 2, wherein:

- before reconstruction step d), the method comprises a step (80) of learning the product $R_j(w)G_j(w)$ of the functions $R_j(w)$ and $G_j(w)$ for various possible locations of the defect, this learning step comprising the following operations:

i) for each sensor, using numerical simulation to measure or estimate an ultrasound signal $F_{j,k}(t)$ measured by this sensor when a known acoustic signal $S_{c,k}(t)$ is applied to the structure at a location $P_k$ the coordinates of which are known in the fixed reference frame, each of the ultrasound signals $F_{j,k}(t)$ being linked, in the frequency domain, to the known acoustic signal $S_{c,k}(t)$ by the following relationship: $F_{j,k}(w) = R_j(w)G_{j,k}(w)S_{c,k}(w)$, where:

- k is an index identifying the location $P_k$ the coordinates of which are known;
- $F_{j,k}(w)$ is the Fourier transform of the ultrasound signal $F_{j,k}(t)$ measured or estimated in the time domain by the sensor j when the known acoustic signal is applied to the location $P_k$,
- $S_{c,k}(w)$ is the Fourier transform of the known acoustic signal $S_{c,k}(t)$ applied to the location $P_k$,
- $R_j(w)$ is the response, in the frequency domain, of the sensor j,
- $G_{j,k}(w)$ is the propagation function, in the frequency domain, of the known acoustic signal $S_{c,k}(t)$ in the structure between the location $P_k$ and the location of the sensor j, and then

ii) for each sensor, storing, in association with the sensor j and the coordinates of the location $P_k$, the product

$R_j(w)G_{j,k}(w)$ of the functions $R_j(w)$ and $G_{j,k}(w)$, the product $R_j(w)G_{j,k}(w)$ being obtained using the following relationship: $R_j(w)G_{j,k}(w) = F_{j,k}(w)/S_{c,k}(w)$,

iii) repeating operations i) and ii) for multiple possible locations $P_k$,

- reconstruction step d) (88) comprises the following operations:

iv) selecting (90) the products $R_j(w)G_{j,k}(w)$ stored in association with the location $P_k$ closest to the position of the defect obtained at the end of the locating step, and then

v) determining (92) the estimate $S_e(w)$ of the signal $S(w)$ based on the terms $(R_j(w)G_{j,k}(w))^*F_j(w)$ or the terms $F_j(w)/(R_j(w)G_{j,k}(w))$, where:

- the products $R_j(w)G_{j,k}(w)$ are those selected in operation iv), and
- the symbol "(...)\*" denotes the conjugate of the complex function between parentheses.

8. Method according to any one of the preceding claims, wherein:

- the method comprises constructing the estimate $S_e(t)$, in the time domain, of the acoustic signal $S(t)$ by applying an inverse Fourier transform to the estimate $S_e(w)$, and then
- the automatic classification is carried out based on the estimate $S_e(t)$ in the time domain.

9. Method according to any one of the preceding claims, wherein the method comprises a dimensionality reduction step (72) in which physical characteristics specific to the signal produced at the position of the defect are extracted from the estimate $S_e(w)$ constructed in reconstruction step d), and then, in automatic classification step c), the automatic classification is carried out based on the characteristics extracted in the dimensionality reduction step (72).

10. Information recording medium able to be read by a microprocessor, **characterized in that** it comprises non-transitory instructions that cause the apparatus according to Claim 11 to execute steps b) to d) of an identification method according to any one of the preceding claims.

11. Apparatus for automatically identifying an acoustic source based on an acoustic signal $S(t)$ produced by the occurrence or the evolution of a defect in a structure, this apparatus comprising:

- at least one sensor ($C_j$) attached to this structure, this sensor being able to measure an ultrasound signal $F_j(t)$ caused by the acoustic signal produced by the occurrence or the evolution of the defect in the structure, this measured ultrasound signal being linked, in the frequency domain, to the produced acoustic signal by the following relationship: $F_j(w) = R_j(w)G_j(w)S(w)$, where:

- j is an index identifying the sensor,
- w is the angular frequency in radians,
- $F_j(w)$ is the Fourier transform of the ultrasound signal $F_j(t)$ measured in the time domain by the sensor j,
- $S(w)$ is the Fourier transform of the acoustic signal $S(t)$ produced by the occurrence or the evolution of the defect in the structure,
- $R_j(w)$ is the response, in the frequency domain, of the sensor j,
- $G_j(w)$ is the propagation function, in the frequency domain, of the acoustic signal in the structure between the position where the defect occurs and the location of the sensor j,

- an electronic computer (10) configured to execute the following steps:

- acquiring the measurements from the sensor, and then
- automatically classifying the acoustic source into a class of acoustic sources chosen from a plurality of possible classes of acoustic sources,

**characterized in that** the electronic computer (10) is also configured:

- before the automatic classification, to execute a step of reconstructing the acoustic signal produced upon the occurrence or the evolution of the defect, this reconstruction step comprising constructing an estimate of the signal produced at the position of the defect based on the ultrasound signal $F_j(t)$ measured by the sensor and using an estimate or a measurement of the product $R_j(w)G_j(w)$ that, in the frequency domain, links the measured ultrasound signal $F_j(w)$ to the produced acoustic signal $S(w)$, and
- the automatic classification is carried out based on the estimate of the acoustic signal obtained at the end of the reconstruction step.

Fig. 1

Fig. 2

Fig. 4

Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- RU 2737235 C1

**Littérature non-brevet citée dans la description**

- **PASHMFOROUSH, F. et al.** Damage characterization of glass/epoxy composite under three-point bending test using acoustic émission technique. *Journal of materials engineering and performance,* 2012, vol. 21 (7), 1380-1390
- **MORIZET, N. et al.** Classification of acoustic émission signals using wavelets and Random Forests : Application to localized corrosion. *Mechanical Systems and Signal Processing,* 2016, vol. 70, 1026-1037
- **HISHAM A SAWAN et al.** Unsupervised learning for classification of acoustic émission events from tensile and bending experiments with open-hole carbon fiber composite samples. *Composites Science and Technology,* 2015, vol. 107, 89-97
- **FAROVA ZUZANA et al.** Experimental Signal Deconvolution in Acoustic Emission Identification Setup. *6th International Workshop NDT in Progress 201,* 12 Octobre 2011, 33-40
- **ZHANG, F. et al.** Evaluation of acoustic émission source localization accuracy in concrète structures. *Structural Health Monitoring,* 2020, vol. 19 (6), 2063-2074
- **SABRA, K. G. et al.** Blind deconvolution in ocean waveguides using artificial time reversai. *The Journal of the Acoustical Society of America,* 2004, vol. 116 (1), 262-271
- **PEARSON M. R. et al.** Improved acoustic émission source location during fatigue and impact events in metallic and composite structures. *Structural Health Monitoring,* 2017, vol. 16 (4), 382-399